# NEW EUROPEAN PATENT SPECIFICATION

(11) **EP 3 377 450 B2**
(45) Date of publication and mention of the opposition decision: **01.10.2025**
(45) Mention of the grant of the patent: 23.12.2020
(21) Application number: 16801420.7
(22) Date of filing: 18.11.2016
(51) Int. Cl.: C02F 1/48, C02F 103/02

(54) **ELECTROMAGNETIC FIELD GENERATOR SYSTEM WITH CURRENT FREQUENCE SWITCHING**
ELEKTROMAGNETISCHES FELDGENERATORSYSTEM MIT STROMFREQUENZ WECHSEL
SYSTÈME DE GÉNÉRATION DE CHAMP ÉLECTROMAGNÉTIQUE AVEC FRÉQUENCE DE COURANT ÉCHANGEANTE

(30) Priority: 19.11.2015 EP 15195331
(43) Date of publication of application: 26.09.2018
(73) Proprietor: Lagur A/S, 8550 Ryomgård (DK)
(72) Inventor: RENÉ NIELSEN, Olav, 8550 Ryomgård (DK)
(74) Representative: Høiberg P/S
(86) International application number: PCT/EP2016/078174
(87) International publication number: WO 2017/085276

(56) References cited:
- EP-A1- 2 036 865
- EP-A1- 2 036 865
- EP-A1- 2 944 614
- WO-A1-2007/015684
- WO-A1-2007/015684
- DE-A1- 10 335 880
- DE-A1- 10 335 880
- FR-A1- 2 692 645
- FR-A1- 2 692 645
- JP-A- 2002 012 782
- JP-A- 2008 290 053
- JP-A- 2008 290 053
- US-A- 5 074 998
- US-A- 5 702 600
- US-A- 5 702 600
- US-A- 5 846 414
- US-A1- 2012 067 727
- US-A1- 2012 067 727
- US-A1- 2015 090 593
- US-A1- 2015 090 593

## Description

### Field of invention

The present invention relates to a system for preventing lime scale deposits in a water container and pipes.

### Background

Lime scale accumulating in a water container and pipes causes problems with clogging and blocking of the pipes. The lime scale formation occurs due to hard water from the groundwater being oversaturated with calcium carbonate that deposits on the inside wall of the pipes or connected installations as lime scale. The build-up of lime scale may have serious consequences such as increased down time in a factory. A water container and pipings comprising installations such as heat exchangers will have reduced efficiency of the heat transfer which may increase the total cost of electricity, and even worse, the installation may be ruined. Especially a water container and pipings operating with a high pump output will have a decrease in performance if not descaled regularly. The problem is also very much related to products that discharge the water from the water container or pipes such as tabs, shower heads, and nozzles which are tedious and time consuming to clean. It is therefore necessary to remove the lime scale from the pipes and installations and preferably on a regular basis to prevent the build up of lime scale.

Lime scale is usually removed with various acids such as citric acid. The process of removing the lime scale from pipings using acids, however, can be time consuming and cumbersome in addition to being expensive.

Also health issues may be involved when lime scale is deposited in pipings or containers for drinking water, since bacteria can adhere more easily to pipes having a rougher surface as a results of the lime scale deposits. After colonising the surface of the lime scale the bacteria can grow and contaminate the water.

One solution to this problem is removing the calcium from the water so it cannot create lime scale on inner side of the pipings or container. This may be done by softening the water by removal of the heavy cat ions by ion exchange or reverse osmosis. The downside of such a system is the high costs involved and lack of scalability. Furthermore, the taste of the water deteriorates when softening the water by removing the minerals.

As an alternative to the descaling methods mentioned, permanent magnets may be used to prevent lime scale deposits in water pipes. However, the effect of applying permanent magnets for preventing lime scale from water pipes is controversial. Hence, there is still a need for improving the prevention of lime scale deposits in pipes without the use of chemicals or removing minerals from the water.

EP 2036865 A1 discloses a device for supplying alternating current (AC) from an AC power supply to a coil wound over a water pipe in a water channel. The current frequency alternates from a first frequency to a second frequency with a sweeping frequency in the range 50 to 150 times/second (Hz).

EP 2944614 A1 discloses an apparatus to inhibit scaling in a water pipe using an electromagnetic field generated from a coil wrapped around the pipe. A control unit is arranged to generate a target current that sweeps between a high frequency value and a low frequency value in the range 500 Hz - 11 kHz.

From this background, it is an object of the present invention to provide a system, by which the above disadvantages are alleviated and in which an improved lime scale prevention system is provided without using chemical or removing minerals from the water. It is further an object of the invention to improve the taste of the water.

### Summary of invention

In a first aspect this and further objects are met by an electromagnetic field generator system suitable for treating water in a water container or pipe according to claim 1.

By providing a system of this kind it has been shown that lime scale will not deposit in the pipes and further calcium has not been removed from the water. Hence, the taste of has not been deteriorated. Without the wish to be bound by any theory it is believed that the lime scale does not deposit on the water pipes, due to a change in the surface of the lime scale crystals in the water. This effect of transforming or changing the structure of the lime scale surface is caused by the electromagnetic field generated from the solenoid which easily passes the process conduit, and is thus applied to the water. Thus, having a different structure, the lime scale is no longer able to deposit in the water pipe. The inventor has found that a portion of the calcium carbonate present in the water may cover a water pipe as a thin film if the water has been electromagnetic treated. The thin film is easy removable compared to lime scale deposits provided from untreated lime scale. It has surprisingly been shown that thin films of calcium carbonate are highly effective as an anti-corrosive agent in pipe assemblies comprising pipes, containers and/or installations. Additionally, the change in the surface of the calcium carbonate further seems to prevent the colonization of bacteria and thus prevent contamination of the water. Thus, the water discharged from such system will be healthier to consume.

The frequency of the current controlled by the controller is an important aspect of the invention since this allows for a superior prevention of lime scale deposits on the pipes. It has surprisingly been shown that if the frequency is alternated, e.g. swept, from a first frequency to a second frequency and back to the first frequency, wherein the first and the second frequency are in the range of 300 to 9000 Hz then lime scale may be sufficiently prevented from depositing on the pipes. Furthermore, the disclosed frequency range allows for the strength of the electromagnetic field to be controlled in a suitable manner. In this way an electromagnetic interference originating from the solenoid may be kept to a minimum without adding additional electromagnetic shielding elements to the system. Thus, the magnetic field generator system may be kept simple and cheap without compromising the performance of the magnetic field generator system.

In a further embodiment, the process conduit is connected to pipes forming a closed water loop adapted for recycling the water stream from the outlet of the process conduit to the inlet of the process conduit.

Surprisingly, when the electromagnetic treated water is looped or recycled and mixed with untreated water, lime scale will not deposit in any containers, installations or pipings that may be connected to the electromagnetic field generator system through the closed water loop. This may be due to a portion of the water present in the closed loop is affected by the electromagnetic treatment causing calcium carbonate to stay in the water matrix or form a thin film of calcium carbonate, which can be easily removed. Instead of forming lime scale deposits, which are not easily removed. Furthermore, as no lime scale deposits are present in the closed water loop, the lifetime of any pipings, containers, and the installation such as a heat exchanger connected upstream of the electromagnetic field generator is improved. This is due to water flowing in an environment free of lime scale deposits and a portion of the water has been treated at least one time in the electromagnetic field generating system. Advantageously, the water discharged from the electromagnetic field generator system has a surprisingly low bacterial count compared to other water treatment methods such as chemical treated water.

The frequency of the current sweeps 1 to 20 times per second, more preferably 4 to 16 times per second, even more preferably 10 to 12 times per second, most preferably 11 times per second.

According to the invention, the solenoid has a self inductance of 1 to 6 mH, more preferably 2 to 5 mH, even more preferably 3 to 4 mH, most preferably 3.5 mH. The self inductance of the solenoid is dependent on the cross sectional area, number turns, and the length of the electric conductor. These variables may be combined in any way possible to obtain a solenoid with self conductance between 1 to 6 mH, most preferably 3.5mH.

In one embodiment the solenoid is covered by an outer element. The outer element may be in any shape possible, but preferably a cylinder. The cylinder is provided with a hollow cavity that is suitable to contain the electric conductor wound around the process conduit, wherein the outer element is provided with at least two apertures, so as the inlet and outlet of process conduit may be in fluid communication with a water container or a pipe. In this way the solenoid is protected from any water surrounding the solenoid, while still allowing the water from the water container or pipe to flow through the inlet and out through the outlet of the process conduit.

In a further embodiment the outer element is made from a non-magnetic material.

In a particular embodiment the outer element is made from non-magnetic stainless steel. In another embodiment the process conduit is made from a non-magnetic material.

In a preferred embodiment the process conduit is made from non-magnetic stainless steel. The advantages of using stainless steel in the present invention is that stainless steel has a low corrosion rate, may withstand high flow rates, easy to handle, and suitable for use in pipes that is intended for providing drinking water. Additionally, stainless steel may be a non-magnetic material, and therefore it does not substantially affect the magnetic field generated from the solenoid when provided with a current.

In a further embodiment according to the invention the electric conductor is made from copper. Copper is preferred since it has a low electric resistance and is easy to shape and fold as desired.

In one embodiment the electrical conductor is covered by an insulate material.

In a particular embodiment the insulate material is made from a polymer. By insulating the electric conductor an enamelled wire is obtained, which is suitable for using in electrical wire systems and electromagnets applications.

In one embodiment the controller sets the output voltage to a value between 34 to 46V, preferably between 38 to 44V, more preferably 42V. The output voltage is important when treating water since the strength of the electromagnetic field may be increased. To improve the lime scale prevention the output voltage may be combined with an optimum sweeping frequency, and a solenoid with an optimum self inductance.

In a further embodiment the process conduit comprises coupling means. This ensures that the electromagnetic field generator system to be installed in a water pipe container or pipe may be configured optimally. In a further embodiment the coupling means may be made from a non-magnetic material so as to not affect the electromagnetic field generated by the present invention. In a particular embodiment the coupling means are made from stainless steel.

In another embodiment according to the invention, the control unit is integrated in a control box. In this way the electric circuit between the control unit and the solenoid may be separated so as the different components do not unintentionally affect the electric and electromagnetic fields of another component. In this way the water may be treated optimally, which leads to a better performing system.

In a particular embodiment the control box is made from any metal, or alloy, preferably stainless steel or more preferably aluminium.

In a further embodiment of the invention the system comprises spacers between the process conduit and the outer element.

In one embodiment the outer element comprises means for receiving electronic means from the control unit to the solenoid.

In another embodiment the outer element is International Protection Marking(IP)68 approved. This essentially makes the system water proof so that the system may be submerged under water without any degradation of the system.

In operation a lot of thermal radiation energy is released causing thermal expansion of the solenoid. The expansion of the solenoid induces mechanical strain in the electromagnetic field generator system, which in worst case may cause the electromagnetic field generating system to fail. To alleviate the problem of thermal expansion, the solenoid is in one embodiment rubber mounted. By rubber mounting the electromagnetic field generating system is provided with a vibration and shock isolator thereby reducing the mechanical stress of the whole electromagnetic field generating system. In operation, the rubber mounting enables the solenoid to move in direction parallel to the water flow thereby lowering the mechanical strain in the electromagnetic field generator system.

The present disclosures also describes a method of preventing or reducing lime scale deposits in a process conduit comprising the steps of:
a. providing a system according to any one of claims 1 to 11
b. applying an alternating current to the electrical conductor
c. applying water through the process conduit via the inlet of the process conduit
wherein the frequency of the alternating current alternates between a first frequency and a second frequency, wherein the first and the second frequency are in the range of 300 to 9000 Hz.

The invention will now be described in greater details.

### Figures

Figure 1 shows a schematic embodiment of the electromagnetic field generator system.
Figure 2a shows another embodiment of the electromagnetic field generator system from a side view.
Figure 2b shows an embodiment of the electromagnetic field generator system from a front view.
Figure 3 shows a schematic embodiment of the electromagnetic field generator system comprising pipings connected to form a closed water loop.

### Detailed description

The term solenoid should be understood as an electric conductor wound into a helix. The interchangeable use of the word electric conductor or solenoid may not be interpreted to limit the scope of the present invention.

The number of times that a frequency alternates per second should be understood as the number of times the frequency alternates from a first frequency to a second frequency and then alternates back to the first frequency during one second.

The term alternates should be understood in the broadest term possible. In one embodiment it could be understood that the frequency switches between a first frequency to a second frequency and then back to the first frequency, wherein the changes in frequencies are done in one step. In another embodiment the controller may ramp the frequency from a first frequency to a second frequency, and then ramp back to the first frequency. In a further embodiment the changes in frequency between the first and the second frequency may follow a sinus curve.

The terms pipe, pipings, container, or containers are meant be understood in the broadest sense possible, and therefore may also comprise but no be limited to water tanks, water appliances, and water dispensers. The interchangeable use of the words pipe, pipings, container or containers may not be interpreted to limit the scope of the present invention.

The terms treat, treating, treated water, or electromagnetic treated are used interchangeably to describe water having been subjected to an electromagnetic field provided from the electromagnetic field generator system according to the invention.

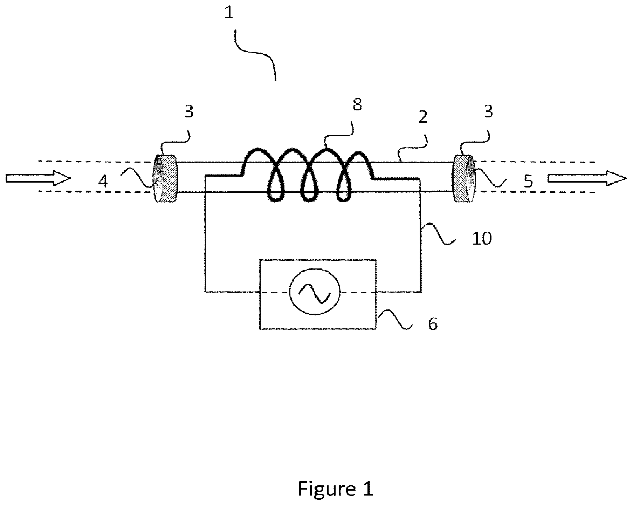

Fig. 1 shows an electromagnetic field generator system according to the invention, wherein the electromagnetic field generator system 1 comprises a process conduit 2, which have an inlet 4 into which water may flow when the system is mounted to a water pipe (depicted with dashed lines). The water may flow through the process conduit 2 on the inner side of the process conduit. The water is treated by an electromagnetic field obtained by providing an alternating current from the control unit 6 to the electrical conductor 8. The control unit 6 is connected by electrical wires 10 to the at least one electrical conductor 8 at each end of the electric conductor 8 in an electric circuit. The water passing the process conduit 2 and exiting at the outlet 5 is denoted treated water. The electrical conductor 8 is wound around the outer surface of the process conduit 2 creating a solenoid with a self inductance of 3.5mH. The electromagnetic fields will easily pass the wall of the process conduit and further pass through the water flowing inside the pipe. The control unit 6 further comprises a frequency and voltage controller for controlling the alternating current. The frequency of the alternating current alternates between a first frequency and a second frequency, wherein the first and the second frequency are in the range of 300 to 9000 Hz. The frequency alternates eleven times per second, and the output voltage of the control unit 6 is 42 V. The current from the control unit 6 is lead by electrical wires 10 to each end of the electrical conductor 8.

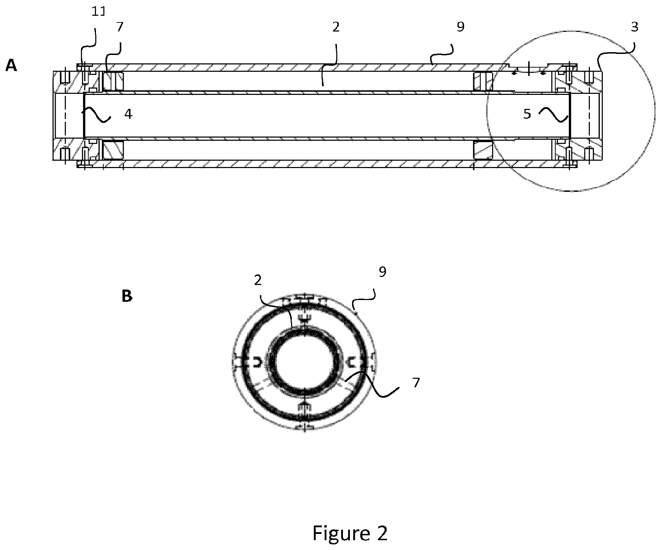

Fig. 2a shows another embodiment of the invention where the electric conductor 8 and process conduit 2 are covered by an outer element 9. The outer element 9 may be made from stainless steel. The electrical wires 10 provided to the electrical conductor 8 are connected through apertures in the outer element 9. Additionally, the electromagnetic field generator system 1 is provided with spacers 7 between the outer element 9 and the process conduit 2, and coupling means 3 are coupled to inlet and outlet of the process conduit 2 for providing coupling between a water pipe that is intended to connect with the electromagnetic field generator system 1. The coupling means 3 are in this embodiment fastened to the outer element 9 by fastening means 11. The fastening means may be any suitable fastening means used in the art selected from but not limited nails, screws and/or bolts.

Figure 2b shows a front view of process conduit 2, where it is visible that the spacers 7 provide a distance between the process conduit 2 and the outer element 9. In one embodiment the hollow cavity created by the distance between process conduit 2 and the outer element 9 may be provided with a seal so that the connection between water pipe to connect with the process conduit 2 may be water tight. The seal may be any suitable seal used in the art selected from but not limited to a packing or a toric joint such as an O-ring.

It is within the general understanding of the invention that more than one aperture may be provided to connect the electrical wires to the electrical conductor.

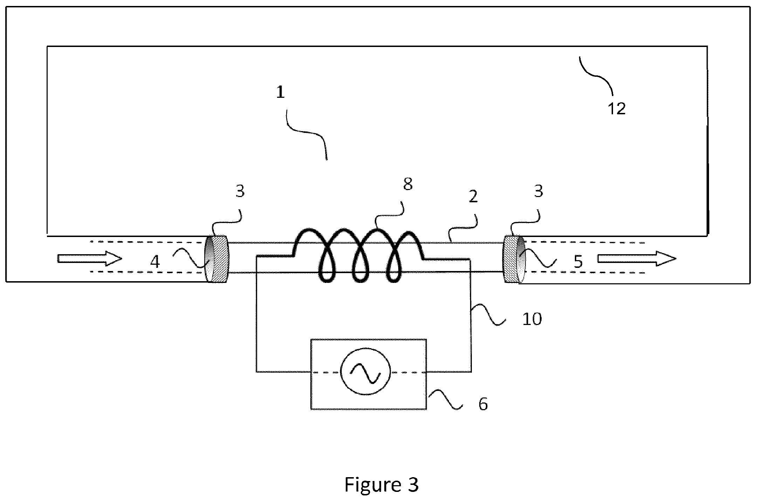

Figure 3 shows a similar embodiment of the invention as described in Figure 1, however, in this embodiment pipings are connected at both ends of the process conduit 4,5 to form a closed water loop 12 adapted for recycling the water stream from the outlet 5 of the process conduit to the inlet 4 of the process conduit.

In general, discharged treated water may then be transferred to a faucet, shower head (not shown) or similar uses where the water can be enjoyed by a user. It could also be easily contemplated that treated water may flow in closed water loop provided by pipings and/or containers where lime scale is prevented to deposit on the sides of the water container, pipings or installation such as condensers and/or other heat exchangers that may be present. In general, the closed water loop system may be provided with an inlet section and a discharge section for providing fresh untreated water or removing treated water from the electromagnetic field generator system.

It is within the general understanding that the invention may also comprise a transformer in the electromagnetic field generator system that transforms an alternating current to be compatible with the control unit. A transformer of this kind has a working range from 100V to 260V and from approx. 45 to 65 Hz. i.e. it operates across the globe.

The electromagnetic field generator system provides a versatile water treatment with an electromagnetic field. This means that the voltage and frequency may be controlled to suit the particular water container or pipings depending on the calcium concentration in the water and the flux of the water flowing through the electromagnetic field generator system.

In another embodiment electromagnetic field generator system may comprise a plurality of solenoids. In a particular embodiment the plurality of solenoids are coupled in a parallel configuration. It is within the general understanding of the invention that each solenoid is wound around one process conduit, wherein the plurality of solenoids may be coupled to one or more control units. In this way, the electromagnetic field generator system may be used in a water container or pipings with a large water flow, wherein the large water flow is divided into a plurality of process conduits provided with a solenoid that receives an alternating current from a control unit to generate an electromagnetic field to treat the water flowing through the plurality of process conduits.

The following describe an exemplary use of an embodiment of the electromagnetic generator system, which may be installed in a pipe assembly for providing drinking water or retrofitted to an existing pipe assembly. Generally, a pipe assembly may comprise a container provided with a container inlet and a container outlet. In operation water is led into the pipe assembly from inlet section having a non-return valve arranged in the container. The water is led from the container outlet to a piping assembly comprising an electromagnetic field generator according to the invention and a discharge section. The pipe assembly provides liquid communication between the container, the electromagnetic field generator and the discharge section. Generally, the liquid communication is obtained by a plurality of interconnected water pipes.

Between the container and discharge section, the electromagnetic field generator is installed for treating water with an electromagnetic field. When the water has been treated, the water is led to the discharge section comprising at least one valve for discharging water from the system. In operation only a portion of the water is discharged at the discharge section, whereas the rest of the water is returned to the container through the pipe assembly, which is in liquid communication with both container inlet and container outlet. By having electromagnetic field generator system connected to pipes forming a closed water loop installed in a pipe assembly any pipes, container and installations installed upstream of the electromagnetic field generator is not subjected to formation of lime scale deposits.

### Example 1

In a mink farm producing over 50,000 minks per year divided into 4 subfarms in 4 different locations, a electromagnetic field generator system was connected to the water pipings in one of the subfarms comprising approximately 10,000 mink puppies. The electromagnetic field generator system generated an electromagnetic field by providing an alternating current, which alternated between 300 and 9000 Hz 11 times per second, to a solenoid with a self inductance of 3.5 mH. In this experiment, the electromagnetic field generator system was installed upstream to the pipings leading into the different mink cages to provide the minks with fresh water. After one 1 year it was observed that the pipe system was free of lime scale and that none of the minks had had any infections. For comparison, approximately 20% of the 40,000 minks in the three neighbouring farms had suffered from diseases like diarrhoea, which is common in mink farms especially in the puppies which are more prone to diseases. The following year the electromagnetic field system was installed in yet another one of the subfarms and a similar result was obtained.

Thus, the prevention of lime scale deposits clearly improved the health conditions of the mink by preventing infections coming from the water pipings and markedly reduced the use of antibiotics in mink farms. Furthermore, when the water is contaminated, it tastes bad, and it can quickly become a problem as too little water intake can lead to fights, cannibalism, bladder stones mm. Thus, a general improved state of health was observed.

### Example 2

To evaluate the effect treating water with an electromagnetic field of the present invention an illustrative experiment was performed. Two pots were filled with water. The first pot of water was filled with 3 L of untreated tab water and the second pot was filled with 3 L water treated by the electromagnetic field generating system according to the invention. The two pots were positioned on separate heating plates causing the water to boil. The pots were removed from the heating plates after all the water was evaporated.

A subsequently inspection of the two pots showed that in the pot, which contained the untreated water, a lime scale deposit had formed on the bottom surface and walls of the first, which could not be easily removed. Surprisingly it was found that in the second pot, which contained the electromagnetic field treated water, a thin film of lime scale, which could easily be removed was observed in bottom of the pot after all the water had evaporated. From the experiment it was concluded that the physical properties of lime scale had been effected by the electromagnetic field.

### Example 3

In a typical counter flow cooling tower, lime scale deposits and algae formation on a fill material i.e. the heat transfer surface and spray nozzles in the cooling tower had been observed. The presence of lime scale deposits and algae reduces the overall cooling capacity of the cooling tower and increases the maintenance cost. Furthermore, a high concentration of bacteria and microfilms was observed in the cooling water reducing the heat transfer efficiency between the heat transfer surface, air and the cooling water.

To solve the abovementioned problems, the cooling water was in a first test subjected to a traditional chemical water treatment method. During 6 months of testing, the abovementioned problem was not solved.

In a second test an electromagnetic field generator system was installed for treating the cooling water before coming into contact with a spray nozzle system of the cooling tower. During the next 6 months no problem with lime scale deposits or algae formation was observed. The second test showed that by treating the cooling water with an electromagnetic field generator system according to the invention a thin film of lime scale was observed on the fill material made from metal. The thin film of lime scale has shown to be an excellent anti-corrosion agent and improves the overall wetting i.e water film formation on the fill material thereby improving the heat exchange efficiency.

Table 1 shows a water analysis of the cooling water, which have been subjected to either a chemical water treatment or the electromagnetic field generator according to the invention. From table 1 it is clear that the bacterial count in cooling water, treated with the present electromagnetic system, is remarkably reduced. Thus, the heat efficiency transfer in the cooling tower is further improved by lowering the concentration of bacteria and microfilms.

**Table 1: Water analysis of cooling water, which have been subjected to chemical water treatment or a treatment by the system according to the invention.**

| Parameters | [unit] | Nov. 2014 Chemical water treatment | Mar. 2015 Chemical water treatment | Nov. 2015 System according to the invention | Feb. 2016 System according to the invention |
|---|---|---|---|---|---|
| Calcium content | CaCO₃ mg/ml | 925 | 970 | 775 | 638 |
| Chloride content | Cl⁻ mg/ml | 205 | 210 | 250 | 190 |
| Phosphate content | PO₄⁻² mg/ml | 14.9 | 15.5 | 0.09 | 0.12 |
| Iron content | Fe mg/ml | 0.15 | 0.26 | 0.005 | 0.014 |
| Temperature | °C | 14.2 | 14 | 14.4 | 13.8 |
| Conductivity | us/cm | 2072 | 2260 | 1750 | 1320 |
| pH | | 8.9 | 8.9 | 8.8 | 8.8 |
| Bacteria/yeast/mould | CFU/ml | 10.000 | >10.000 | 1890 | 300 |
| CFU-count 22g | per ml. | | | 1500 | 260 |
| CFU-count 37g | per ml. | | | 350 | 9 |
| Yeast/mould | CFU/ml | | | 40 | 31 |
| Total | | | | 1890 | 300 |

## Claims

1. An electromagnetic field generator (1) system suitable for treating water in a water container or pipe comprising:
at least one electrical conductor (8) and a control unit (6) comprising a power supply;
and a process conduit (2) provided with an inner side, an outer side, an inlet (4) for introducing a water stream on the inner side, an outlet (5) for discharging the water stream from the inner side of process conduit and the electric conductor is wound around the process conduit to obtain a solenoid;
the control unit provides an alternating current to the electric conductor and controls the voltage and the frequency of the current, wherein the frequency of the alternating current alternates between a first frequency and a second frequency, wherein the first and the second frequency are in the range of 300 to 9000 Hz, and wherein the frequency of the alternating current alternates 1 to 20 times per second, where the number of times that the frequency of the alternating current alternates per second is the number of times the frequency alternates from the first frequency to the second frequency and then alternates back to the first frequency during one second, **characterised in that**
the solenoid has a self inductance from 1 to 6 mH, more preferably 2 to 5 mH, even more preferably 3 to 4 mH, and most preferably 3.5 mH.

2. The electromagnetic field generator system (1) according to claim 1, wherein the process conduit (2) is connected to pipes forming a closed water loop adapted for recycling the water stream from the outlet of the process conduit to the inlet of the process conduit (2).

3. The electromagnetic field generator system according to any one of claims 1 to 2, wherein the frequency of the alternating current alternates 4 to 16 times per second, even more preferably 10 to 12 times per second, and most preferably 11 times per second.

4. The electromagnetic field generator system (1) according to any one of claims 1 to 3 wherein, a plurality of solenoids are coupled in a parallel configuration, wherein each solenoid is wound around one process conduit (2), wherein the plurality of solenoids in the parallel configuration is coupled to one or more control units (6), so that the water flow is divided into the plurality of process conduits each provided with a solenoid that receives an alternating current from the control unit (6) to generate an electromagnetic field to treat the water flowing through the plurality of process conduits.

5. The electromagnetic field generator system (1) according to any one of claims 1 to 4, wherein the electric conductor (8) is covered by an outer element (9).

6. The electromagnetic field generator system (1) according to claim 5, wherein the outer element (9) is made from non-magnetic material.

7. The electromagnetic field generator system (1) according to any one of claims 1 to 6, wherein the electrical conductor (8) is made from copper.

8. The electromagnetic field generator system (1) according to any one of claims 1 to 7, wherein the control unit (6) sets the output voltage to a value between 34 to 46V, preferably between 38 to 44V, more preferably 42V.

9. The electromagnetic field generator system (1) according to any one of claims 1 to 8, wherein the control unit (6) is integrated in a control box.

10. The electromagnetic field generator system (1) according to claim 9, wherein the control box is made from any metal or alloy, preferably stainless steel.

11. The electromagnetic field generator system (1) according to claims 1 to 10, wherein the solenoid is rubber mounted.

## Patentansprüche

1. System (1) eines elektromagnetischen Feldgenerators, das zur Behandlung von Wasser in einem Wasserbehälter oder -rohr geeignet ist und Folgendes umfasst:
mindestens einen elektrischen Leiter (8) und eine Steuereinheit (6), die eine Leistungsversorgung umfasst;
und eine Prozessleitung (2), die mit einer Innenseite, einer Außenseite, einem Einlass (4) zum Einbringen eines Wasserflusses an der Innenseite und einem Auslass (5) zum Auslassen des Wasserflusses von der Innenseite der Prozessleitung versehen ist, und wobei der elektrische Leiter derart um die Prozessleitung gewickelt ist, dass ein Solenoid erhalten wird;
wobei die Steuereinheit einen Wechselstrom an den elektrischen Leiter liefert und die Spannung und die Frequenz des Stroms steuert, wobei die Frequenz des Wechselstroms zwischen einer ersten Frequenz und einer zweiten Frequenz alterniert, wobei die erste und die zweite Frequenz im Bereich von 300 bis 9000 Hz liegen und wobei die Frequenz des Wechselstroms 1- bis 20-mal pro Sekunde alterniert, wobei die Anzahl der Alternationen der Frequenz des Wechselstroms pro Sekunde die Anzahl der Alternationen der Frequenz von der ersten Frequenz zu der zweiten Frequenz und dann zurück zu der ersten Frequenz innerhalb einer Sekunde ist, **dadurch gekennzeichnet, dass**
das Solenoid eine Selbstinduktivität von 1 bis 6 mH, bevorzugter 2 bis 5 mH, noch bevorzugter 3 bis 4 mH und am meisten bevorzugt 3,5 mH aufweist.

2. System (1) eines elektromagnetischen Feldgenerators nach Anspruch 1, wobei die Prozessleitung (2) derart mit Rohren verbunden ist, dass ein geschlossener Wasserkreislauf gebildet wird, der zum Zurückführen des Wasserflusses vom Auslass der Prozessleitung zum Einlass der Prozessleitung (2) ausgelegt ist.

3. System eines elektromagnetischen Feldgenerators nach einem der Ansprüche 1 bis 2, wobei die Frequenz des Wechselstroms 4- bis 16-mal pro Sekunde, noch bevorzugter 10- bis 12-mal pro Sekunde und am meisten bevorzugt 11-mal pro Sekunde alterniert.

4. System (1) eines elektromagnetischen Feldgenerators nach einem der Ansprüche 1 bis 3, wobei mehrere Solenoide in einer parallelen Konfiguration gekoppelt sind, wobei jedes Solenoid um eine Prozessleitung (2) gewickelt ist, wobei die mehreren Solenoide in der parallelen Konfiguration mit einer oder mehreren Steuereinheiten (6) gekoppelt sind, sodass der Wasserfluss auf die mehreren Prozessleitungen aufgeteilt wird, die jeweils mit einem Solenoid versehen sind, das dahingehend einen Wechselstrom von der Steuereinheit (6) empfängt, ein elektromagnetisches Feld zum Behandeln des durch die mehreren Prozessleitungen fließenden Wassers zu erzeugen.

5. System (1) eines elektromagnetischen Feldgenerators nach einem der Ansprüche 1 bis 4, wobei der elektrische Leiter (8) durch ein äußeres Element (9) abgedeckt ist.

6. System (1) eines elektromagnetischen Feldgenerators nach Anspruch 5, wobei das äußere Element (9) aus einem nichtmagnetischen Material besteht.

7. System (1) eines elektromagnetischen Feldgenerators nach einem der Ansprüche 1 bis 6, wobei der elektrische Leiter (8) aus Kupfer besteht.

8. System (1) eines elektromagnetischen Feldgenerators nach einem der Ansprüche 1 bis 7, wobei die Steuereinheit (6) die Ausgangsspannung auf einen Wert zwischen 34 und 46 V, bevorzugt zwischen 38 und 44 V, bevorzugter 42 V einstellt.

9. System (1) eines elektromagnetischen Feldgenerators nach einem der Ansprüche 1 bis 8, wobei die Steuereinheit (6) in einem Steuerkasten integriert ist.

10. System (1) eines elektromagnetischen Feldgenerators nach Anspruch 9, wobei der Steuerkasten aus einem beliebigen Metall oder einer beliebigen Legierung, bevorzugt aus Edelstahl, besteht.

11. System (1) eines elektromagnetischen Feldgenerators nach den Ansprüchen 1 bis 10, wobei das Solenoid gummigelagert ist.

## Revendications

1. Système générateur de champ électromagnétique (1) approprié pour traiter de l'eau dans un réservoir ou tuyau d'eau comprenant :
au moins un conducteur électrique (8) et une unité de commande (6) comprenant un bloc d'alimentation ;
et une conduite de procédé (2) pourvue d'un côté interne, d'un côté externe, d'une entrée (4) pour introduire un courant d'eau sur le côté interne, d'une sortie (5) pour évacuer le courant d'eau du côté interne de la conduite de procédé et le conducteur électrique est enroulé autour de la conduite de procédé pour obtenir un solénoïde ; l'unité de commande fournit un courant alternatif au conducteur électrique et
commande la tension et la fréquence du courant, la fréquence du courant alternatif alternant entre une première fréquence et une deuxième fréquence, la première et la deuxième fréquence se situant dans la gamme de 300 à 9000 Hz, et la fréquence du courant alternatif alternant 1 à 20 fois par seconde, le nombre de fois que la fréquence du courant alternatif alterne par seconde étant le nombre de fois que la fréquence passe de la première fréquence à la deuxième fréquence et retourne ensuite à la première fréquence pendant une seconde ;
**caractérisé en ce que** le solénoïde a une inductance propre de 1 à 6 mH, mieux de 2 à 5 mH, mieux encore de 3 à 4 mH, et idéalement de 3,5 mH.

2. Système générateur de champ électromagnétique (1) selon la revendication 1, dans lequel la conduite de procédé (2) est raccordée à des tuyaux formant une boucle d'eau fermée adaptée pour recycler le courant d'eau de la sortie de la conduite de procédé à l'entrée de la conduite de procédé (2).

3. Système générateur de champ électromagnétique selon l'une quelconque des revendications 1 à 2, dans lequel la fréquence du courant alternatif alterne 4 à 16 fois par seconde, mieux encore 10 à 12 fois par seconde, et idéalement 11 fois par seconde.

4. Système générateur de champ électromagnétique (1) selon l'une quelconque des revendications 1 à 3, dans lequel une pluralité de solénoïdes sont couplés dans une configuration parallèle, chaque solénoïde étant enroulé autour d'une conduite de procédé (2),
dans lequel la pluralité de solénoïdes dans la configuration parallèle est couplée à une ou plusieurs unités de commande (6), de telle sorte que l'écoulement d'eau est réparti dans la pluralité de conduites de procédé pourvues chacune d'un solénoïde qui reçoit un courant alternatif depuis l'unité de commande (6) pour générer un champ électromagnétique pour traiter l'eau s'écoulant à travers la pluralité de conduites de procédé.

5. Système générateur de champ électromagnétique (1) selon l'une quelconque des revendications 1 à 4, dans lequel le conducteur électrique (8) est recouvert d'un élément externe (9).

6. Système générateur de champ électromagnétique (1) selon la revendication 5, dans lequel l'élément externe (9) est fabriqué à partir d'un matériau amagnétique.

7. Système générateur de champ électromagnétique (1) selon l'une quelconque des revendications 1 à 6, dans lequel le conducteur électrique (8) est fabriqué à partir de cuivre.

8. Système générateur de champ électromagnétique (1) selon l'une quelconque des revendications 1 à 7, dans lequel l'unité de commande (6) règle la tension de sortie à une valeur comprise entre 34 et 46 V, de préférence entre 38 et 44 V, mieux encore à 42 V.

9. Système générateur de champ électromagnétique (1) selon l'une quelconque des revendications 1 à 8, dans lequel l'unité de commande (6) est intégrée dans un coffret de commande.

10. Système générateur de champ électromagnétique (1) selon la revendication 9, dans lequel le coffret de commande est fabriqué à partir de n'importe quel métal ou alliage, de préférence d'acier inoxydable.

11. Système générateur de champ électromagnétique (1) selon les revendications 1 à 10, dans lequel le solénoïde est monté sur caoutchouc.
